# EUROPÄISCHE PATENTSCHRIFT

(11) **EP 2 235 278 B1**
(45) Veröffentlichungstag und Bekanntmachung des Hinweises auf die Patenterteilung: **13.06.2012**
(21) Anmeldenummer: 08867679.6
(22) Anmeldetag: 22.11.2008
(51) Int. Cl.: E04B 2/74, F16P 1/02

(54) **TRENNWAND, INSBESONDERE ZUR EINHAUSUNG VON VERPACKUNGSMASCHINEN FÜR LEBENSMITTEL**
PARTITION, PARTICULARLY FOR HOUSING PACKAGING MACHINES FOR FOOD
CLOISON, EN PARTICULIER POUR MÉNAGER UNE ENCEINTE AUTOUR DE MACHINES D'EMBALLAGE POUR ALIMENTS

(30) Priorität: 21.12.2007 DE 102007062813
(43) Veröffentlichungstag der Anmeldung: 06.10.2010
(73) Patentinhaber: KHS GmbH, 44143 Dortmund (DE)
(72) Erfinder: DETEMPLE, Thomas, 82152 Planegg (DE)
(86) Internationale Anmeldenummer: PCT/EP2008/009918
(87) Internationale Veröffentlichungsnummer: WO 2009/083072

(56) Entgegenhaltungen:
- DE-A1- 3 422 704
- DE-A1- 4 004 200
- DE-U1- 20 018 840
- FR-A- 2 411 931
- US-A- 2 886 147

## Beschreibung

Die Erfindung richtet sich auf eine Trennwand, insbesondere zur Einhausung von Verpackungsmaschinen für Lebensmittel zur Bildung eines Reinraumes aus einer Mehrzahl von Trennwandelementen, insbesondere von Glasscheiben.

Es gibt eine Reihe von Einsatzfällen, in denen es sinnvoll ist, Maschinen mit einer sogenannten Einhausung zu versehen. Dies kann aus unterschiedlicher Motivation sinnvoll sein, etwa zum Schallschutz, zum Spritzschutz, wenn Flüssigkeiten eingesetzt werden, und zur Absperrung, um versehentliches oder unbefugtes Herantreten an die entsprechend eingehausten Maschinen zu verhindern.

Gerade wenn Lebensmittel verpackt werden, ist schon aus hygienischen Gründen die Notwendigkeit einer solchen Einhausung gegeben. Es handelt sich dabei um eine Umrandung oder Absperrung um die Maschinen herum bzw. um entsprechende Transportstrecken zu schützen innerhalb einer Fertigungs-, Füll- und Verpackungsanlage, nicht zuletzt wegen des Umwelt- und Arbeitsschutzes.

Derartige Einhausungen sind aus der DE-197 23 954-A bekannt, die einen Reinraum zeigt, oder aus dem DE-20 2004 001 619-U der Anmelderin, um Beispiele zu nennen.

Ebenfalls bekannt wurde eine verstellbare, also an verschiedenen Orten eines Hauses positionierbare Wand gemäß der FR 2 411 931, welche eine Trennwand gemäß dem Oberbegriff des Anspruchs 1 zeigt. Doch eignet sich eine Trennwand für einen Wohnraum nicht zur Verwendung als Trennwand zur Ausbildung einer Einhausung.

Ebenfalls bekannt wurden Trennwandelemente entsprechend der DE 34 22 704 A1, wobei sich auch diese Trennwandelemente nicht zur Bildung einer Einhausung eignen.

Insbesondere bei Lebensmittel verarbeitenden Maschinen werden diese in der Regel intensiv gereinigt z.B. mit Hochdruckreinigern, wobei man selbstverständlich bemüht ist, alle Schmutzpartikel, etwa anfallende Scherben bei Glas bzw. Flaschen einsetzenden Maschinen, aus der Einhausung auszutragen, wozu es teilweise notwendig ist, entsprechende Flächen zu öffnen, um diese Reinigung vorzunehmen.

Hier setzt die Erfindung an, deren Aufgabe darin besteht, insbesondere die Reinigung mit Hochdruckreinigern dadurch stark zu vereinfachen, dass zur Austragung von Schmutz u. dgl. die Trennwand so gestaltet ist, dass eine besondere Manipulation an sämtlichen Trennwänden entfallen kann.

Diese Aufgabe wird gemäß der Erfindung dadurch gelöst, dass die Glasscheiben oder Trennwandelemente auf Standelementen derart positioniert sind, dass ein Spalt zwischen der Fußbodenfläche und der Unterkante der Trennwandelemente gebildet ist und dass in diesem Spalt den Spalt überbrückende, über Scharniere bewegliche Spaltplatten vorgesehen sind.

Derartige bewegliche Spaltplatten sorgen zum einen für den notwendigen Abschluss der Trennwände gegenüber dem Auflageboden, zum anderen ermöglichen sie aber, dass z.B. Schmutzpartikel, Glasscherben, ganze Flaschen u. dgl. mit einem Hochdruckreiniger unter der Trennwand hindurchgespült werden können, da sich die Spaltplatten dann bei Beaufschlagung etwa durch einen Hochdruckwasserstrahl selbständig öffnen und über die Scharniere später in ihre Schließlage wieder zurückfallen.

Ausgestaltungen der Erfindung ergeben sich aus den Unteransprüchen. Dabei kann vorgesehen sein, dass die Scharniere der Spaltplatten an den Standelementen der Trennwände vorgesehen sind, was insbesondere die Herstellung und den Aufbau derartiger Elemente deutlich vereinfacht.

Nach der Erfindung kann auch vorgesehen sein, dass die Aufhängung der Spaltplatten ein Aufschwenken nach außerhalb des durch die Trennwände gebildeten Innenraumes ermöglichen bei Verhinderung des Einschwenkens in den gebildeten Raum.

Vorteilhaft kann es sein, wenn die Spaltplatten aus einem leicht zerschneidbaren bzw. knickbaren Material zur Anpassung an die jeweilige Aufstellsituation gebildet sind, etwa wenn die Trennwände eine schräge Fußbodenlage überwinden müssen, geringfügige Stufen od. dgl. Hier lässt sich die Spaltplatte besonders leicht den örtlichen Gegebenheiten am Aufstellungsort anpassen.

Wird eine entsprechende Vorrichtung bei Flaschenabfüllanlagen eingesetzt, so sieht die Erfindung hier vor, dass die Spaltplatten in der Gebrauchslage wenigstens die Breite einer liegenden Flasche aufweisen, wobei auch vorgesehen sein kann, dass die Spaltplatten mit ihren Randkanten dem Verlauf der Standfüße der Trennwandelemente folgen.

Die Erfindung ist nachstehend anhand der Zeichnung beispielsweise näher erläutert. Diese zeigt in

Fig. 1 eine vereinfachte räumliche Darstellung eines Aus-
a) schnittes aus einer Trennwand nach der Erfindung in
b) einer Außenansicht sowie in

Fig. 2 eine Innenansicht eines Trennwandteiles.

Die allgemein mit 1 bezeichnete Trennwand ist im dargestellten Beispiel nur als Ausschnitt gezeichnet, und zwar dort mit drei, die Trennwandelemente 2 bildenden Glasscheiben.

Im dargestellten Beispiel sind die einzelnen Trennwandelemente 2 auf mit 4 die Höhe der Trennwandelemente 2 veränderbar ist.

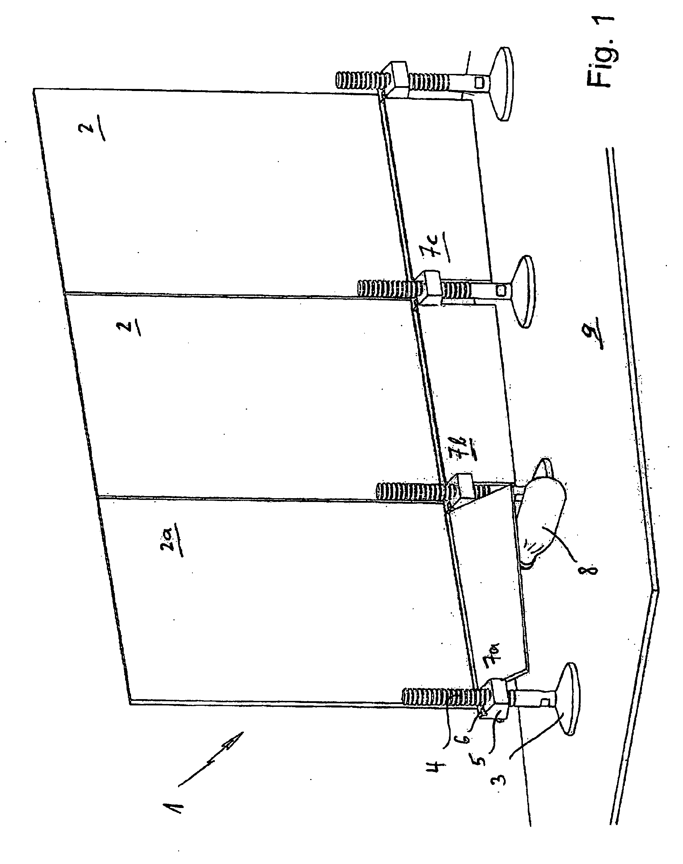

Um die Standfüßen 3 versehenen Gewindeelementen 4 positioniert, wobei durch Drehung der Gewindeelemente Steigung des Gewindes aufzunehmen, sind mit Innengewinde versehene, als Klötze gestaltete Lagerelemente 5 vorgesehen, die auf der in der Gebrauchslage nach außen weisenden Randkontur Auflager 6 für nicht näher dargestellte Drehzapfen an den Rändern von Spaltplatten 7 aufweisen, derart, dass die Spaltplatten 7 mit den Drehzapfen dort eingehängt werden können, was eine Bewegung möglich macht, aus der hängenden Lage in eine Ausschwenklage, wie sie in Fig. 1 an dem mit 2a bezeichneten Trennwandelement dargestellt ist. Die dortige Spaltplatte trägt das Bezugszeichen 7a und ruht im dargestellten Beispiel auf einer beim Reinigung nach außen gespülten Flasche 8, die, wird sie von einem Reinigungsstrahl eines Hochdruckreinigers getroffen, nach außen verbracht wird.

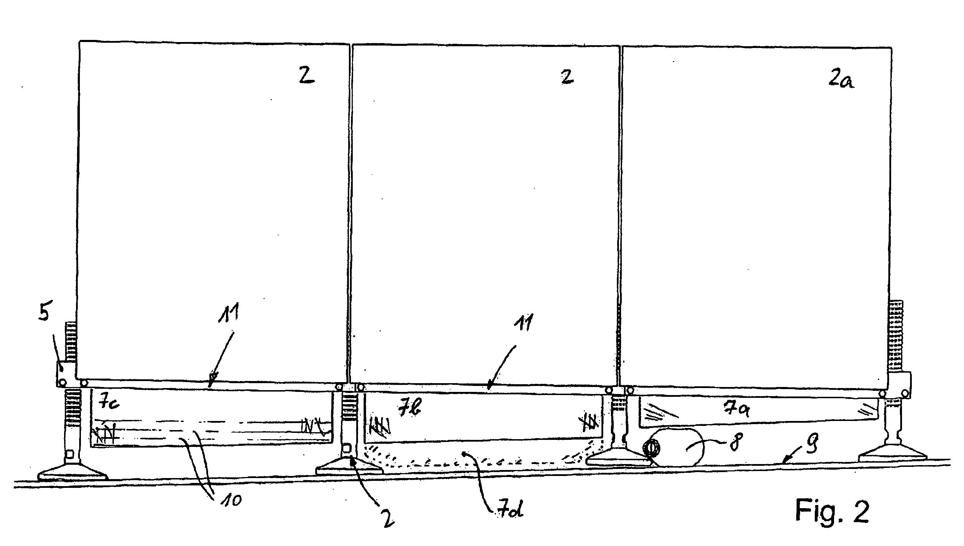

In Fig. 1 ist auch erkennbar, dass die Spaltplatten 7a, 7b und 7c unterschiedliche Breiten aufweisen, da sie einem schrägen Untergrund 9 zugeordnet sind. Um diese Anpassung zu erleichtern, sind die Spaltplatten 7 aus einem Material, das sich beispielsweise leicht schneiden lässt oder aber es sind in entsprechenden Abständen Sollbruchstellen 10 vorhanden, wie dies in Fig. 2 an der Spaltplatte 7c angedeutet ist.
In Fig. 2 ist auch noch bei der Spaltplatte 7b punktiert angedeutet, dass in diese, da leicht zerschneidbar, auch an die Form der Standfüße bzw. Standelemente 2 anpassbar ist. Dieser Bereich ist in Fig. 2 mit 7d bezeichnet.
Den Gewindeklötzen 5 sind, wie in Fig. 2 angedeutet, Tragbalken 11 zugeordnet, die die Trennwandelemente 2 aufnehmen.

Aufgrund der speziellen Aufhängung der Spaltplatten 7 können diese in der in Fig. 1 dargestellten Weise nach einer Seite aufschwenken, wobei die Rückschwenkbewegung durch die Tragbalken 11 derart eingeschränkt ist, dass die Spaltplatten 7 nur in die von den Tragbalken 11 abgewandte Richtung aufschwenken können.

Natürlich ist das beschriebene Ausführungsbeispiel der Erfindung noch in vielfacher Hinsicht abzuändern, ohne den durch die Ansprüche gewährten Schutzumfang zu verlassen. So ist die Erfindung insbesondere nicht auf die Art der dargestellten Stand- und Verstellfüße als Tragelemente beschränkt, auch nicht auf Art und Gestaltung der Spaltplatten u. dgl. mehr.

## Patentansprüche

1. Trennwand (1), zur Einhausung von Verpackungsmaschinen für Lebensmittel zur Bildung eines Reinraumes aus einer Vielzahl von Trennwandelementen, insbesondere von Glasscheiben, wobei die Gasschelben oder Trennwandelemente (2) derart positioniert sind, dass ein Spalt zwischen der Fussbodenfläche (9) und der Unterkante der Trennwandelemente (2) gebildet ist und dass In diesem Spalt den Spalt überbrückende, Spaltplatten (7) vorgesehen sind, **dadurch gekennzeichnet, dass** an jedem dieser Trennwandelemente (2) in Richtung der Beaufschlagung durch einen Hochdruckwasserstrahl genau eine Spaltplatte (7) vorgesehen ist und dass diese genau eine Spaltplatte (7), über Scharniere beweglich ist, und dass sich diese genau eine Spalplatte (7) bei Beaufschlagung durch einen Hochdruckwasserstrahl selbstständig öffnet und dann über die Scharniere später in ihre Schließlage wieder zurückfäll.

2. Vorrichtung nach Anspruch 1, **dadurch gekennzeichnet, dass** die Trennwandelemente (2) mit Standelementen (3,4) versehen sind und dass die Scharniere der Spaltplatten (7) an den Standelementen (3,4) der Trennwand (1) vorgesehen sind.

3. Vorrichtung nach Anspruch 1 oder 2, **dadurch gekennzeichnet, dass** die Aufhängung der Spaltplatten (7) ein Aufschwenken nach außerhalb des durch die Trennwände (1) gebildeten Innenraumes ermöglichen bei Verhinderung des Einschwenkens in den gebildeten Raum.

4. Vorrichtung nach einem der vorangehenden Ansprüche,
**dadurch gekennzeichnet, dass**
die Spaltplatten (7) aus einem leicht zerschneidbaren bzw. knickbaren Material zur Anpassung an die jeweilige Aufstellsituation gebildet sind.

5. Vorrichtung nach einem der vorangehenden Ansprüche,
**dadurch gekennzeichnet, dass**
die Spaltplatten (7) in der Gebrauchslage wenigstens die Breite einer liegenden Flasche aufweisen.

6. Vorrichtung nach einem der vorangehenden Ansprüche,
**dadurch gekennzeichnet, dass**
die Spaltplatten (7) mit ihren Randkanten dem Verlauf der Standfüße der Trennwandelemente (2) folgen.

## Claims

1. A partition (1) for housing packaging machines for food, for forming a clean room from a plurality of partition wall elements, particularly glass panes, the glass panes or partition wall elements (2) being positioned so as to leave a gap between the floor surface (9) and the lower edge of the partition wall elements (2) and that gap plates (7) bridging the gap are provided in said gap, wherein exactly one gap plate (7) is provided at each of these partition wall elements (2) in the direction of impingement by a high-pressure water jet, this exactly one gap plate (7) is movable by hinges, and this exactly one gap plate (7) opens by itself when impinged by a high-pressure water jet and then falls back afterwards by the hinges into its closed position.

2. A device according to claim 1 wherein the partition wall elements (2) are provided with stand elements (3,4) and the hinges of the gap plates (7) are provided on the stand elements (3,4) of the partition (1).

3. A device according to claim 1 or 2 wherein the suspension of the gap plates (7) permits a swinging up to the outside of the interior space formed by the partitions (1) while preventing a swinging into the formed space.

4. A device according to any one of the preceding claims wherein the gap plates (7) are formed from a material that can be readily cut or folded to suit the particular installation situation.

5. A device according to any one of the preceding claims wherein the gap plates (7) exhibit at least the width of a prone bottle when in the operation position.

6. A device according to any one of the preceding claims wherein the gap plates (7) follow the line of the feet of the partition wall elements (2) with their outer edges.

## Revendications

1. Cloison (1) servant à abriter des machines d'emballage pour des produits alimentaires, servant à former un espace propre constitué d'une pluralité d'éléments de cloison, en particulier de vitres, sachant que les vitres ou les éléments de cloison (2) sont positionnés de telle manière qu'un interstice est formé entre la surface du plancher (9) et l'arête inférieure des éléments de cloison (2) et sachant que des panneaux interstitiels (7) recouvrant l'interstice sont prévus dans cet interstice, **caractérisée en ce que** précisément un panneau interstitiel (7) est prévu au niveau de chacun des éléments de cloison (2) dans la direction de l'exposition à un jet d'eau haute pression, et **en ce que** précisément ce panneau interstitiel (7) au moins au nombre de un est mobile par l'intermédiaire de charnières, et **en ce que** ledit panneau interstitiel (7) au moins au nombre de un s'ouvre automatiquement en cas d'exposition à un jet d'eau haute pression et s'abaisse à nouveau ultérieurement dans sa position de fermeture par l'intermédiaire des charnières.

2. Dispositif selon la revendication 1, **caractérisé en ce que** les éléments de cloison (2) sont pourvus d'éléments d'appui (3, 4), et **en ce que** les charnières des panneaux interstitiels (7) sont prévues au niveau des éléments d'appui (3, 4) de la cloison (1).

3. Dispositif selon la revendication 1 ou 2, **caractérisé en ce que** la suspension des panneaux interstitiels (7) permet un mouvement vers le haut par pivotement vers l'extérieur de l'espace intérieur formé par les cloisons (1) tout en empêchant un mouvement vers l'intérieur par pivotement dans l'espace formé.

4. Dispositif selon l'une quelconque des revendications précédentes,
**caractérisé en ce que**
les panneaux interstitiels (7) sont formés à partir d'un matériau se laissant facilement découper ou plier en vue de l'adaptation à chaque situation de fixation.

5. Dispositif selon l'une quelconque des revendications précédentes,
**caractérisé en ce que**
les panneaux interstitiels (7) présentent en situation d'utilisation au moins la largeur d'une bouteille couchée.

6. Dispositif selon l'une quelconque des revendications précédentes,
**caractérisé en ce que**
les panneaux interstitiels (7) sont guidés par leurs arêtes de bord le long des pieds d'appui des éléments de cloison (2).
